# EUROPEAN PATENT APPLICATION

(11) **EP 4 782 470 A1**
(43) Date of publication of application: **29.07.2026**
(21) Application number: 25745882.8
(22) Date of filing: 07.03.2025
(51) Int. Cl.: C08F 120/06, C08G 73/02, C09D 133/02, H01M 4/62

(54) **CONDUCTIVE ADHESIVE AND PREPARATION METHOD THEREFOR, NEGATIVE ELECTRODE SHEET, AND BATTERY**

(30) Priority: 10.12.2024 CN 202411817092
(71) Applicant: Eve Power Co., Ltd., Jingmen, Hubei 448000 (CN)
(72) Inventor: ZHU, Weihua, Jingmen, Hubei 448000 (CN); HE, Wei, Jingmen, Hubei 448000 (CN); YUAN, Dingding, Jingmen, Hubei 448000 (CN); CHEN, Xue, Jingmen, Hubei 448000 (CN); HUANG, Xin, Jingmen, Hubei 448000 (CN); ZHAO, Hongwan, Jingmen, Hubei 448000 (CN); WANG, Zhiqi, Jingmen, Hubei 448000 (CN)
(74) Representative: Berggren Oy
(86) International application number: PCT/CN2025/081303
(87) International publication number: WO 2026/123479

(57) **Abstract**

The present application provides a conductive adhesive and a preparation method thereof, a negative electrode sheet and a battery, which belongs to a field of battery technology. The conductive adhesive has a structural formula represented by formula (1), where m: n= (1-4): 1.

## Description

The present application claims a priority of Chinese patent application No. 202411817092.2 filed with China Patent Office on December 10, 2024, the entire disclosures of which are incorporated by reference into the present application.

### TECHNICAL FIELD

The present application belongs to the field of battery technology, and specifically relates to a conductive adhesive and a preparation method thereof, a negative electrode sheet and a battery.

### BACKGROUND

With a rapid development of new energy vehicles, there are currently higher requirements for the fast charging capability and endurance capability of the new energy vehicles in the market. In order to improve the fast charging capability of the battery and shorten the charging time, it is usually necessary to reduce an internal resistance of the battery so that the battery meets the requirements of high-power charging.

### SUMMARY

In the relevant art, increasing a proportion of a conductive agent in an electrode sheet is often used to reduce the internal resistance of the battery. However, since the conductive agent itself cannot contribute to a capacity during the charging and discharging process of the battery, it will result in the decrease in proportion of the active material in the electrode sheet correspondingly as the proportion of the conductive agent increases, which will in turn lead to a decrease in the capacity of the battery and a decrease in the endurance capability of the battery.

The present application provides a conductive adhesive, in which a structural formula of the conductive adhesive is represented by formula (1): 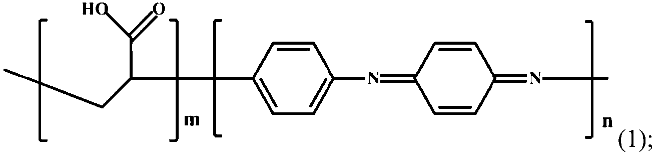 m: n= (1-4): 1.

The present application also provides a preparation method for a conductive adhesive, for preparing the conductive adhesive described above, comprising: copolymerizing acrylic acid and aniline to obtain a conductive adhesive; where a molar ratio of acrylic acid to aniline is (1-4): 1.

The present application also provides a negative electrode sheet, comprising a current collector and a negative electrode active layer formed on at least one side of the current collector, the negative electrode active layer comprises a negative electrode active material, a conductive agent and an adhesive. The adhesive comprises the conductive adhesive described above, and/or a conductive adhesive prepared by the preparation method for the conductive adhesive described above.

The present application also provides a battery, comprising the negative electrode sheet described above.

### Beneficial Effect

The conductive adhesive provided in the embodiment of the present application has a structural formula represented by the formula (1), that is, the conductive adhesive includes an acrylic acid unit and an aniline unit, and the molar ratio of the acrylic acid unit to the aniline unit is (1-4): 1. The conductive adhesive provided in the embodiment of the present application can have both good bonding property and conductive property. By applying the conductive adhesive to the battery, the electrochemical reaction power of the battery can be increased without reducing the content of the active material in the electrode sheet and without affecting the battery capacity, thereby ensuring the endurance capability of the battery.

The preparation method of the conductive adhesive provided in the embodiment of the present application can make acrylic acid polymerize to form the polyacrylic acid unit and make aniline polymerize to form the polyaniline unit by copolymerizing acrylic acid and aniline, so that the obtained conductive adhesive has both a bonding property and a conductive property. By setting the molar ratio of acrylic acid to aniline to (1-4):1, the prepared conductive adhesive can ensure good bonding property and conductive property at the same time. When the conductive adhesive is applied to a battery, the electrochemical reaction power of the battery is improved without increasing the content of the conductive agent and without affecting the battery capacity, thereby ensuring the endurance capability of the battery.

The negative electrode sheet provided in the embodiment of the present application, through inclusion of at least part of the conductive adhesive in the adhesive, can improve the electrochemical reaction power of the battery without increasing the content of the conductive agent, thereby reducing the internal resistance of the battery while ensuring the endurance capability of the battery.

The battery provided in the embodiment of the present application, by applying the negative electrode sheet as described above, can reduce the internal resistance of the battery while ensuring the endurance capability of the battery.

### DETAILED DESCRIPTION

In the description of the present application, unless otherwise clearly specified and limited, the terms "interconnected", "connected", and "fixed" should be understood in a broad sense. For example, it may be a fixed connection, a detachable connection, or an integral connection; it may also be a mechanical connection or an electrical connection; it may be a direct connection or an indirect connection through an intermediate medium, it may be the communication inside two elements or the interaction relationship between two elements. For one of ordinary skill in the present art, the specific meanings of the above terms in the present application may be understood according to the specific circumstances.

In the present application, unless otherwise clearly specified and limited, a first feature being "above" or "below" a second feature may include the first feature being direct contact with the second feature, or may include the first feature being not in contact with the second feature but being in contact with each other through another feature between them. Moreover, a first feature being "above", "on" and "top" a second feature includes the first feature being directly above and obliquely above the second feature, and the first feature having a higher horizontal height than the second feature. The first feature being "below", "under" and "underneath" a second feature includes the first feature being directly below and obliquely below the second feature, and the first feature having a lower horizontal height than the second feature.

In the description of the present embodiment, the directional or positional relationships such as the terms "upper", "lower", "left", "right", "front" and "rear" are based on the directional or positional relationships shown in the drawings, and are for the convenience of description and simplification of operation, rather than indicating or implying that the device or element referred to must have a specific direction, be constructed and operated in a specific direction, and therefore cannot be understood as limiting the present application. In addition, the terms "first" and "second" are used to distinguish in the description and have no special meaning.

In a first aspect, an embodiment of the present application provides a conductive adhesive, a structural formula of the conductive adhesive is represented by formula (1):

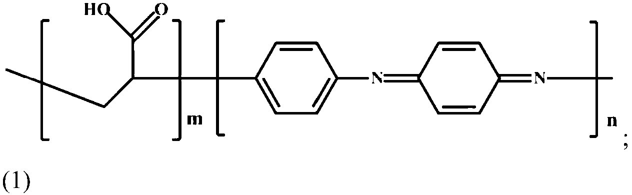

Where, m: n= (1-4):1.

In the embodiment of the present application, the structural formula of the conductive adhesive is represented by the formula (1), that is, the conductive adhesive includes an acrylic acid unit and an aniline unit, and a molar ratio of the acrylic acid unit to the aniline unit is (1-4): 1. The conductive adhesive provided in the embodiment of the present application can have both good bonding property and conductive property. By applying the conductive adhesive to the battery, the electrochemical reaction power of the battery can be increased without reducing the content of the active material in the electrode sheet and without affecting the capacity of the battery, thereby ensuring the endurance capability of the battery.

In the conductive adhesive provided in the embodiment of the present application, a carboxyl group is present in the acrylic acid unit, which can form a strong hydrogen bond with the active substance material containing a group such as a hydroxyl group on the surface, in turn providing the bonding property. There is a strong binding force between the active material and the current collector. There are a large number of conjugated structures and nitrogen atoms in the aniline unit, which makes the conductive adhesive have good conductivity. By reasonably setting the molar ratio between the acrylic acid unit and the aniline unit in the conductive adhesive, the conductive adhesive can have both good bonding property and conductive property. When the conductive adhesive provided in the embodiment of the present application is applied to a battery, since the conductive adhesive has both bonding property and conductive property, the conductive adhesive can improve the electrochemical reaction power of the battery without increasing the content of the conductive agent, thereby reducing the internal resistance of the battery while ensuring the endurance capability of the battery after replacing the conventional adhesive.

Exemplarily, m: n may be 1:1, 1:2, 1:3 or 1:4.

It is understandable that the conductive adhesive provided in the embodiment of the present application may also use other polymerization units with the bonding property to replace the acrylic acid unit, such as an acrylonitrile unit, a vinylidene fluoride unit etc., and may also use other polymerizationunits with conductive property to replace the aniline unit, such as a pyrrole unit, a thiophene unit, a carbazole unit, an acetylene unit, etc. In addition, the acrylic acid unit and the aniline unit in the embodiment of the present application may also be replaced.

In some embodiments, the conductive adhesive has a molecular weight of 0.9 × 10⁶- 1.5× 10⁶. By setting the molecular weight of the conductive adhesive within the above range, it is possible to ensure that the conductive adhesive has a certain degree of polymerization, so that the conductive adhesive has good bonding property and conductive property. Meanwhile, it is possible to make the conductive adhesive maintain good solubility property, reduce process difficulty, and ensure coating uniformity.

Exemplarily, the molecular weight of the conductive adhesive may be 0.9 × 10⁶, 1.0 × 10 ⁶, 1.1 × 10⁶, 1.2 × 10⁶, 1.3 × 10⁶, 1.4 × 10⁶, or 1.5 × 10⁶.

In a second aspect, an embodiment of the present application provides a preparation method for a conductive adhesive, for preparing the conductive adhesive as described above, comprising:

Copolymerizing acrylic acid and aniline to obtain a conductive adhesive. The molar ratio of acrylic acid to aniline is (1-4): 1.

By copolymerizing acrylic acid and aniline, the acrylic acid can be polymerized to form a polyacrylic acid unit, and the aniline can be polymerized to form a polyaniline unit, so that the obtained conductive adhesive has both bonding property and conductive property. By setting the molar ratio of acrylic acid to (1-4):1, the prepared conductive adhesive can ensure good bonding property and good conductive property at the same time. When the conductive adhesive is applied to battery, the electrochemical reaction power of the battery is improved without increasing the content of the conductive agent and without affecting the capacity of the battery, thereby ensuring the endurance capability of the battery.

In some embodiments, a preparation method for a conductive adhesive includes:
dispersing acrylic acid in a first solvent to obtain an acrylic acid solution;
adding a first polymerization agent to an acrylic acid solution to obtain a first mixed solution, and subjecting the first mixed solution to a polymerization reaction to obtain a polyacrylic acid solution;
adding a sodium hydroxide solution to the polyacrylic acid solution, then adding an aniline solution and a second polymerization agent solution to obtain a second mixed solution, subjecting the second mixed solution to a polymerization reaction to obtain a copolymer solution;
drying the copolymer solution to obtain a conductive adhesive;
where, the molar ratio of acrylic acid to aniline is (1-4):1.

That is, the acrylic acid and the first polymerizing agent are firstly subjected to a polymerization reaction so as to form a polyacrylic acid solution, and then an aniline solution and a second polymerizing agent solution are added to the polyacrylic acid solution to cause a copolymerization reaction, and then a conductive adhesive is obtained by drying.

In some embodiments, the dispersing acrylic acid in a first solvent to obtain the acrylic acid solution comprises:
mixing acrylic acid and a deionized water at a temperature of 30 °C to 40 °C under a protective atmosphere to obtain the acrylic acid solution;
Where, the mass percentage of the acrylic acid in the acrylic acid solution is 10%-15%.

Under a condition of 30°C-40°C, the acrylic acid and the deionized water can form an acrylic acid solution with good stability, which is conducive to the smooth progress of subsequent reactions. By controlling the mass percentage of the acrylic acid in the acrylic acid solution within the range of 10%-15%, it is helpful for the polymerization reaction of acrylic acid to proceed under a relatively mild condition, and guarantee the yield of polyacrylic acid, improving the uniformity of molecular weight distribution and the property stability.

Exemplarily, the acrylic acid and the deionized water may be mixed at a temperature of 30° C, 32°C, 35°C, 37°C, or 40°C. In the acrylic acid solution, the mass percentage of acrylic acid may be 10%, 11%, 12%, 13%, 14%, or 15%.

In some embodiments, the adding a first polymerization agent to the acrylic acid solution to obtain a first mixed solution comprises:
adding ammonium persulfate and tetramethyldiethylamine to the acrylic acid solution to obtain a first mixed solution;
In the first mixed solution, a mass ratio of acrylic acid, ammonium persulfate and tetramethyldiethylamine is (100-120): (1.0-1.2): (0.5-1.5).

Ammonium persulfate is a strong oxidant that can accelerate the oxidation of acrylic acid, thereby initiating the polymerization of acrylic acid to form polyacrylic acid. Tetramethyldiethylamine (TEMED) can catalyze ammonium persulfate to produce a free radical, thereby accelerating the polymerization reaction of acrylic acid.

By setting the mass ratio of acrylic acid, ammonium persulfate and tetramethyldiethylamine to (100-120): (1.0-1.2): (0.5-1.5), the polymerization reaction of acrylic acid can be effectively initiated, and an appropriate polymerization speed can be ensured, so that the polymerization reaction proceeds smoothly and efficiently, and the molecular weight distribution of the polymer is uniform, thereby obtaining the stable polyacrylic acid.

Exemplarily, in the first mixed solution, the mass ratio of acrylic acid, ammonium persulfate and tetramethyldiethylamine may be 100:1: 0.5, 110 :1.1:1, 100:1.2:1.5, 110:1:0.5, 110: 1.1: 0.5 or 100:1:1.5.

In some embodiments, the polymerization reaction time of the first mixed solution is 20-30 h.

Exemplarily, the polymerization reaction time of the first mixed solution may be 20 h, 22 h, 25 h, 27 h or 30 h.

In some embodiments, the adding the sodium hydroxide solution to the polyacrylic acid solution, and then adding aniline and a second polymerization agent to obtain a second mixed solution, and subjecting the second mixed solution to a polymerization reaction, comprises:
adding the sodium hydroxide solution to the polyacrylic acid solution, and then adding aniline and ammonium persulfate at a condition of 0°C-5°C;
reacting the second mixed solution at a temperature of 0°C -5°C for 5 h - 12 h.

By adding the sodium hydroxide solution to the polyacrylic acid solution, the acidic carboxyl groups in the polyacrylic acid can be neutralized, and the pH value of the solution can be adjusted by sodium hydroxide, which in turn provides a suitable environment for the subsequent aniline polymerization. Under the condition of 0°C-5°C, ammonium persulfate can initiate the oxidative coupling reaction of aniline. The lower reaction temperature condition is helpful to reduce the occurrence of side reactions, ensure the purity of the product and the reaction stability, such that the controllability of the reaction process is increased.

Exemplarily, the temperature condition may be 0°C, 1°C, 2°C, 3°C, 4°C or 5°C. The reaction time may be 5 h, 7 h, 9 h, 10 h or 12 h.

In some embodiments, the molar ratio of aniline to the second polymerization agent is (0.5-2): 1.

That is, the molar ratio of aniline to ammonium persulfate is (0.5-2):1, which can make the reaction rate controllable and improve the reaction stability while maintaining a high reaction efficiency. In addition, by setting the ratio of the two within the above range, the product can meet the requirements and have good property.

Exemplarily, the molar ratio of aniline to the second polymerization agent may be 0.5:1, 1: 1, 1.5:1, or 2:1.

In some embodiments, the molar ratio of sodium hydroxide to acrylic acid is (0.2-0.5):1. By controlling the molar ratio of sodium hydroxide to acrylic acid, the pH value of the solution can be controlled within a suitable range, providing a suitable environment for the subsequent reaction.

Exemplarily, the molar ratio of sodium hydroxide to acrylic acid may be 0.5:1, 0.3:1, 0.4: 1 or 0.5:1.

In a third aspect, an embodiment of the present application further provides a negative electrode sheet, comprising a current collector, and a negative electrode active layer formed on at least one side of the current collector; the negative electrode active layer includes a negative electrode active material, a conductive agent, and an adhesive. The adhesive includes the conductive adhesive as described above, and/or the conductive adhesive prepared by the preparation method for the conductive adhesive as described above.

In the negative electrode sheet provided in the embodiment of the present application, the adhesive includes at least a part of a conductive adhesive, so that the electrochemical reaction power of the battery can be improved without increasing the content of the conductive agent, thereby reducing the internal resistance of the battery while ensuring the endurance capability of the battery.

In some embodiments, the negative electrode active layer includes a first active layer and a second active layer, the first active layer is disposed on at least one side of the current collector, the second active layer is disposed on a side of the first active layer away from the current collector, the first active layer includes a conductive adhesive, and the second active layer includes a conductive adhesive. The mass proportion of the conductive agent in the first active layer is a₁, the mass proportion of the conductive agent in the second active layer is a₂, and a ₁ >a ₂.

In the conductive adhesive in the first active layer, n/m = b₁, and in the conductive adhesive in the second active layer, n/m = b₂, where b₁ <b ₂.

The conductive agent usually has a large specific surface area and are prone to incur a side reaction with the electrolyte, which in turn leads to a decrease in the cycle property and storage property of the battery. In the embodiment of the present application, the first active layer is disposed close to the current collector, and the second active layer is disposed on the side of the first active layer away from the current collector, that is, the first active layer is located on the inner side and is not in direct contact with the electrolyte, and the second active layer is located on the outer side and can be in direct contact with the electrolyte. By adopting a gradient distribution setting, the content of the conductive agent in the second active layer located on the outer side is made lower, reducing the side reaction of the conductive agent with the electrolyte. In order to reduce the impedance difference caused by the inconsistent contents of the conductive agent in the first active layer and the second active layer, the current distribution is uneven, and the first active layer and the second active layer respectively use conductive adhesives with different n/m. Due to the different molar ratios of the aniline unit and the acrylic acid unit in the conductive adhesive in the first active layer and the conductive adhesive in the second active layer, it results in the difference in the conductive properties of the two. In the conductive adhesive in the first active layer, n/m = b1, and in the conductive adhesive in the second active layer n/m = b2, b1<b2. Since the proportion of the aniline unit in the conductive adhesive in the second active layer is larger than the proportion of the aniline unit in the first active layer, the conductive property of the second active layer is made better than that of the first active layer, thereby compensating for the reduced conductivity caused by the lower content of the conductive agent in the second active layer, and making the conductive property of the first active layer and the second active layer basically consistent.

In some embodiments, 0.4%≤a₁≤0.6%. By controlling the mass proportion of the conductive agent in the first active layer in a range from 0.4% to 0.6%, a good conductive network can be formed in the first active layer, which has good dispersion property and ensures the energy density of the first active layer.

Exemplarily, a₁ may be 0.4%, 0.5% or 0.6%.

In some embodiments, 0.2% ≤ a₂ ≤ 0.4%. Similarly, by controlling the mass proportion of the conductive agent in the second active layer in a range from 0.2% to 0.4%, a good conductive network can be formed in the second active layer, which has good dispersion property and ensures the energy density of the second active layer.

In addition, the conductive adhesive is added to both the first active layer and the second active layer, which can improve the conductivity without increasing the content of the conductive agent. The decrease in conductivity caused by the low content of the conductive agent in the second active layer can be compensated by the conductive adhesive with good conductive property, thereby keeping the conductive property of the first active layer and the second active layer basically consistent.

Exemplarily, a₂ may be 0.2%, 0.3% or 0.4%.

In some embodiments, 0.25≤ b₁≤0.5. By controlling b₁ within the range from 0.25 to 0.5, that is, the molar ratio of the aniline unit to the acrylic acid unit in the conductive adhesive in the first active layer is 0.25-0.5, the conductive adhesive in the first active layer can have a certain conductive property while maintaining good bonding property. Since the first active layer is located on the inner side, the addition proportion of the conductive agent is relatively high, and b₁ is controlled within the range from 0.25 to 0.5 to meet the conductive property while improving the bonding property, so that the first active layer can be well bonded to the surface of the current collector.

Exemplarily, b₁ may be 0.25, 0.3, 0.35, 0.4, 0.45 or 0.5.

In some embodiments, 0.7 ≤b₂ ≤ 1. By controlling b₁ within the range from 0.25 to 0.5, that is, the molar ratio of the aniline unit to the acrylic acid unit in the conductive adhesive in the second active layer is 0.7-1, the conductive adhesive in the second active layer can have a certain conductive property while maintaining good bonding property. Since the second active layer is located on the outer side, the addition proportion of the conductive agent is relatively low, and b₂ is controlled within the range from 0.7 to 1, it can ensure that the second active layer is bonded to the first active layer while making the conductive properties of the second active layer and the first active layer basically consistent, reducing the impedance difference between the first active layer and the second active layer due to the inconsistent content of the conductive agent, and improving the distribution uniformity of the current in the first active layer and in the second active layer.

Exemplarily, b₂ may be 0.7, 0.75, 0.8, 0.85, 0.9, 0.95 or 1.

In some embodiments, the conductive agent includes at least one of a carbon black, a carbon fiber, a carbon nanotube or a superconducting carbon black. The carbon black has a large specific surface area and porosity, which is helpful to form a good conductive network and improve conductivity. The carbon fiber has high conductive property while having good mechanical properties, high temperature resistance and corrosion resistance. The carbon nanotube has an excellent conductivity while having double layer effect, which is helpful to improve the high-rate charge and discharge property of the battery. The superconducting carbon black has higher conductivity than that of the ordinary carbon black, has higher chemical activity, and better dispersion property.

In a fourth aspect, an embodiment of the present application further provides a battery, comprising the negative electrode sheet as described above.

The battery provided in the embodiment of the present application has all the advantages of the negative electrode sheet, which will not be described in detail here.

The following examples are further described in conjunction with specific embodiments. It should be understood that these examples are only used to illustrate the present application and are not intended to limit the scope of the present application. The experimental methods in the following examples that do not specify specific conditions are usually based on the conditions recommended by the manufacturer.

### Example 1

### Preparation of the conductive adhesive:

(1) Under a protective atmosphere, acrylic acid and the deionized water were mixed at a temperature of 30°C-40°C to obtain an acrylic acid solution; where the mass percentage of acrylic acid in the acrylic acid solution is 10;
(2) Ammonium persulfate and tetramethyl diethylamine were added to the acrylic acid solution to obtain a first mixed solution, the first mixed solution was subjected to a polymerization reaction for 25 h to obtain the polyacrylic acid solution; the mass ratio of acrylic acid, ammonium persulfate and tetramethyl diethylamine in the first mixed solution is 110:1.1:1;
(3) A sodium hydroxide solution having a concentration of 1 mol/L was added to the polyacrylic acid solution, and then aniline and a ammonium persulfate solution having a concentration of 1 mol/L were added at a condition of 3°C to obtain a second mixed solution, the second mixed solution was reacted at a temperature condition of 3°C for 8 h to obtain a copolymer solution; where the molar ratio of aniline to ammonium persulfate is 1:1, and the molar ratio of sodium hydroxide to acrylic acid is 0.3:1;
(4) The copolymer solution was dried to obtain a conductive adhesive.

During the preparation process, by adjusting the ratio of aniline to acrylic acid, a first conductive adhesive having a molar ratio of polyaniline unit to polyacrylic acid unit of 0.5 and a second conductive adhesive having a molar ratio of polyaniline unit to polyacrylic acid unit of 1 were prepared respectively;

### Preparation of the battery:

(1) A positive electrode slurry was formulated, the mass proportions of lithium manganese iron phosphate, the superconducting carbon black, the carbon nanotube, polyvinylidene fluoride, the dispersant and the carbon fiber in the positive electrode slurry were 96.9%, 0.5%, 0.4%, 1.8%, 0.2% and 0.2% respectively;
(2) The positive electrode slurry was coated on both sides of an aluminum foil with a thickness of 1.2 µm, and a positive electrode sheet was obtained after drying; where the positive electrode sheet has a compaction density of 2.55 g /cm³ and has a surface density of 200 g /m²;
(3) A first negative electrode slurry and a second negative electrode slurry were formulated, the mass proportions of graphite, the superconducting carbon black, sodium carboxymethyl cellulose and the first conductive adhesive in the first negative electrode slurry are 96.0% , 0.8% , 1.2% and 1.5% respectively, and the mass proportions of graphite, the superconducting carbon black, sodium carboxymethyl cellulose and the second conductive adhesive in the second negative electrode slurry are 97.4% , 0.4% , 1.2% and 1.5% respectively;
(4) The first negative electrode slurry was coated on both sides of a copper foil with a thickness of 5 µm, and after drying, a first active layer was formed on both sides of the copper foil, and then the second negative electrode slurry was coated on the first active layer to form a second active layer on the first active layer to obtain a negative electrode sheet; where the compaction density of the negative electrode sheet is 1.65 g /cm³ and the surface density is 97 g /m²;
(5) A solvent and a lithium salt were formulated to an electrolyte; where the mass proportions of ethylene carbonate, propylene carbonate, ethyl methyl carbonate and dimethyl carbonate in the solvent are 30%, 5%, 25% and 20% respectively, the concentration of the lithium salt is 1 mol/L, and the molar ratio of lithium bisfluorosulfonimide to lithium hexafluorophosphate is 1:1;
(6) The positive electrode sheet, the negative electrode sheet, the electrolyte and the separator were assembled into a battery; where the injection coefficient of the electrolyte is 3.1, and a roll coated membrane of 7 µm + 2 µm + 2 µm was used for the separator, that is, the base film has a thickness of 7 µm, and the roll coated layer of 2 µm is coated on the double sides.

### Example 2

The difference of the present Example from Example 1 is that in the positive electrode slurry, the mass proportions of lithium iron phosphate, the superconducting carbon black, the carbon nanotube, polyvinylidene fluoride, the dispersant and the carbon fiber are 97.1%, 0.5%, 0.4%, 1.8%, 0.2% and 0.2% respectively; in the first active layer, the mass proportions of graphite, the superconducting carbon black, sodium carboxymethyl cellulose and the first conductive adhesive are 96.7%, 0.6%, 1.2% and 1.5% respectively ; in the second negative electrode slurry, the mass proportions of graphite, the superconducting carbon black, sodium carboxymethyl cellulose and the second conductive adhesive are 96.7% , 0.6% , 1.2% and 1.5% respectively; the other conditions are consistent with those in Example 1 .

### Example 3

The difference of the present Example from Example 1 is that in the first active layer, the mass proportions of graphite, the superconducting carbon black, sodium carboxymethyl cellulose and the first conductive adhesive are 97.4%, 0.4%, 1.2% and 1.0% respectively; in the second negative electrode slurry, the mass proportions of graphite, superconducting carbon black, sodium carboxymethyl cellulose and the second conductive adhesive are 96.0%, 0.8%, 1.2% and 2.0% respectively; the other conditions are consistent with those in Example 1.

### Example 4

The difference of the present Example from Example 2 is that in the first active layer, the mass proportions of graphite, the superconducting carbon black, sodium carboxymethyl cellulose and the first conductive adhesive are 97.4%, 0.4%, 1.2% and 1.0% respectively; in the second negative electrode slurry, the mass proportions of graphite, the superconducting carbon black, sodium carboxymethyl cellulose and the second conductive adhesive are 96.0%, 0.8%, 1.2% and 2.0% respectively; the other conditions are consistent with those in Example 2.

### Example 5

The difference of the present Example from Example 1 is that the molar ratio of the polyaniline unit to the polyacrylic acid unit in the first conductive adhesive is 0.8; the negative electrode sheet adopts a single-layer coating manner, and only the first active layer is coated; in the first active layer, the mass proportions of graphite, the superconducting carbon black, sodium carboxymethyl cellulose and the first conductive adhesive are 96.7%, 0.6%, 1.2% and 1.5% respectively; the other conditions are consistent with those in Example 1.

### Example 6

The difference of the present Example from Example 2 is that: the molar ratio of the polyaniline unit to the polyacrylic acid unit in the first conductive adhesive is 0.8; the negative electrode sheet adopts a single-layer coating manner, and only the first active layer is coated; in the first active layer, the mass proportions of graphite, the superconducting carbon black, sodium carboxymethyl cellulose and the first conductive adhesive are 96.7% , 0.6%, 1.2% and 1.5% respectively; the other conditions are consistent with those in Example 2.

### Example 7

The difference of the present Example from Example 1 is that the molar ratio of the polyaniline unit to the polyacrylic acid unit in the first conductive adhesive is 1, and the molar ratio of the polyaniline unit to the polyacrylic acid unit in the second conductive adhesive is 0.25; the other conditions are consistent with those in Example 1.

### Comparative Example 1

The difference of the present Example from Example 1 is that: the negative electrode sheet adopts a single-layer coating manner, and only the first active layer is coated; in the first active layer, the mass proportions of graphite, the superconducting carbon black, sodium carboxymethyl cellulose and polyacrylic acid are 96.7%, 0.6%, 1.2 % and 1.5 % respectively; the other conditions are consistent with those in Example 1.

### Comparative Example 2

The difference of the present Example from Example 2 is that: the negative electrode sheet adopts a single-layer coating manner, and only the first active layer is coated; in the first active layer, the mass proportions of graphite, the superconducting carbon black, sodium carboxymethyl cellulose and polyacrylic acid are 96.7%, 0.6%, 1.2% and 1.5 % respectively; the other conditions are consistent with those in Example 2.

### Comparative Example 3

The difference between the present Example and Example 1 is that the negative electrode sheet adopts a double-layer coating manner, where the first conductive adhesive and the second conductive adhesive are replaced by polyacrylic acid; the other conditions remain consistent as those in Example 1.

The batteries of Examples 1-7 and Comparative Examples 1-3 were subjected to cycle tests and DCR (DC internal resistance of the battery) tests. The cycle test method is as follows: the battery was subjected to a fully charged and fully discharged cycle at a condition of 25°C, and the capacity retention rate at 500, 1000 and 3000 cycles was recorded. The DCR test method is as follows: the battery was fully charged at 25°C, and the battery was fully discharged after being left for 0.5h, and the discharge capacity Q was recorded. The battery was fully charged again, and after being left for 0.5h, the battery was discharged at 0.1C for 0.5Q, left for 1h, and the voltage at this time was recorded as V₀, and then discharged at 1C for 30s, and the voltage V₁ and current I at the end of the discharge were recorded, then DCR= (V₀ - V₁)/I, and the unit was converted to mΩ. The full discharge means: at a condition of 25°C, the battery was discharged at 1C to 2.5V, full charge means: at 25°C, the battery was charged at 0.33C constant current to the cut-off voltage (3.65V for LFP battery, 4.2V for LMFP battery), changed to constant voltage charging, the cut-off current is 0.05C. The test results were shown in Table 1:

**Table 1 Comparison table of test results of different Examples and Comparative Examples**

| | Capacity retention rate at 500 cycles /% | Capacity retention rate at 1000 cycles/% | Capacity retention rate at 3000 cycles/ % | DCR/mΩ |
|---|---|---|---|---|
| [Table 1_sm_0001] | | | | |
| Example 1 | 97.53 | 95.14 | 91.07 | 0.834 |
| Example 2 | 96.87 | 94.32 | 90.37 | 0.813 |
| Example 3 | 98.07 | 95.78 | 91.85 | 0.789 |
| Example 4 | 97.56 | 95.23 | 91.41 | 0.795 |
| Example 5 | 96.57 | 93.89 | 89.23 | 0.853 |
| Example 6 | 96.01 | 93.25 | 88.57 | 0.901 |
| Example 7 | 95.67 | 91.48 | 89.02 | 0.921 |
| Comparative Example 1 | 95.31 | 91.28 | 86.14 | 0.927 |
| Comparative Example 2 | 95.04 | 90.66 | 86.07 | 0.910 |
| Comparative Example 3 | 95.54 | 91.36 | 88.26 | 0.969 |

As may be seen from Table 1, the conductive adhesive provided in the Examples of the present application were adopted in the batteries in Examples 1-7, which have better cycle property and lower DCR than the batteries in Comparative Examples 1-3. In the batteries of Examples 1-4, a double-layer coating form was used for the negative electrode sheet, which has better cycle property and lower DCR than that of the single-layer coating form adopted in Examples 5-6. In Example 7, due to the low content of the conductive agent in the second active layer while the use of the second conductive adhesive with a low molar ratio of polyaniline unit to polyacrylic acid unit, the conductive property of the second active layer in the negative electrode sheet is poor, and the improvement of the conductive property and DCR is not obvious compared with Comparative Examples 1-3.

## Claims

1. A conductive adhesive, wherein a structural formula of the conductive adhesive is represented by formula (1): 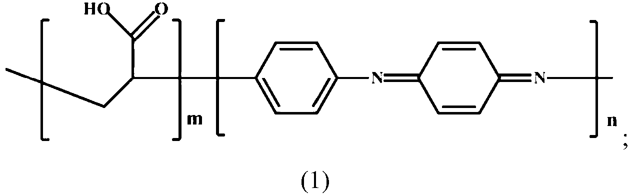 wherein, m: n= (1-4): 1.

2. The conductive adhesive according to claim 1, wherein the conductive adhesive has a molecular weight of 0.9 × 10⁶ -1.5 × 10⁶.

3. A preparation method for a conductive adhesive, for preparing the conductive adhesive as claimed in claim 1 or 2, comprising:
copolymerizing acrylic acid and aniline to obtain the conductive adhesive;
wherein, a molar ratio of acrylic acid to aniline is (1-4):1.

4. The preparation method for the conductive adhesive according to claim 3, wherein the dispersing acrylic acid in a first solvent to obtain an acrylic acid solution comprises adding a first polymerization agent to the acrylic acid solution to obtain a first mixed solution, and subjecting the first mixed solution to a polymerization reaction to obtain a polyacrylic acid solution;
adding a sodium hydroxide solution to the polyacrylic acid solution, and then adding aniline and a second polymerization agent to obtain a second mixed solution, and subjecting the second mixed solution to a polymerization reaction to obtain a copolymer solution; and
drying the copolymer solution to obtain a conductive adhesive.

5. The preparation method for the conductive adhesive according to claim 4, wherein the dispersing acrylic acid in the first solvent to obtain an acrylic acid solution comprises:
mixing the acrylic acid with deionized water at a temperature of 30°C-40°C under a protective atmosphere to obtain the acrylic acid solution;
wherein, a mass percentage of the acrylic acid in the acrylic acid solution is 10%-15%.

6. The preparation method for the conductive adhesive according to claim 4, wherein the adding the first polymerization agent to the acrylic acid solution to obtain the first mixed solution comprises:
adding ammonium persulfate and tetramethyldiethylamine to the acrylic acid solution to obtain the first mixed solution;
wherein, in the first mixed solution, a mass ratio of acrylic acid, ammonium persulfate and tetramethyldiethylamine is (1.00-120): (1.0-1.2): (0.5-1.5).

7. The preparation method for the conductive adhesive according to claim 4, wherein a polymerization reaction time of the first mixed solution is 20 h-30 h.

8. The preparation method for the conductive adhesive according to claim 4, wherein the adding the sodium hydroxide solution to the polyacrylic acid solution, and then adding aniline and a second polymerization agent to obtain a second mixed solution, and subjecting the second mixed solution to a polymerization reaction comprises:
adding the sodium hydroxide solution to the polyacrylic acid solution, and then adding aniline and ammonium persulfate at a condition of 0°C-5°C;
reacting the second mixed solution at a temperature condition of 0°C-5°C for 5 h-12 h.

9. The preparation method for the conductive adhesive according to any one of claims 4 to 8, wherein a molar ratio of aniline to the second polymerizing agent is (0.5-2): 1;
and/or, a molar ratio of sodium hydroxide to acrylic acid is (0.2-0.5):1.

10. A negative electrode sheet, comprising a current collector and a negative electrode active layer formed on at least one side of the current collector, wherein the negative electrode active layer comprises a negative electrode active material, a conductive agent and a binder;
wherein, the adhesive comprises the conductive adhesive as recited in claim 1 or 2, the conductive adhesive prepared by the preparation method for the conductive adhesive as recited in any one of claims 3 to 9.

11. The negative electrode sheet according to claim 10, wherein the negative electrode active layer comprises a first active layer and a second active layer, the first active layer is disposed on at least one side of the current collector, the second active layer is disposed on a side of the first active layer away from the current collector, the first active layer comprises the conductive adhesive, and the second active layer comprises the conductive adhesive;
wherein a mass ratio of the conductive agent in the first active layer is a₁, a mass proportion of the conductive agent in the second active layer is a₂, and a₁ >a₂;
wherein, in the conductive adhesive in the first active layer, n/m= b₁, and in the conductive adhesive in the second active layer, n/m= b₂, and b₁<b₂.

12. The negative electrode sheet according to claim 11, wherein 0.4% ≤ a₁ ≤ 0.6%; and/or 0.2% ≤ a₂ ≤ 0.4.

13. The negative electrode sheet according to claim 11, wherein: 0.25≤ b₁ ≤0.5; and/or, 0.7≤ b₂≤ 1.

14. The negative electrode sheet according to claim 10, wherein the conductive agent comprises at least one of carbon black, carbon fiber, carbon nanotube or superconducting carbon black.

15. A battery comprising the negative electrode sheet according to any one of claims 10 to 14.
